# EUROPEAN PATENT SPECIFICATION

(11) **EP 4 686 581 B1**
(45) Date of publication and mention of the grant of the patent: **28.10.2026**
(21) Application number: 25188314.6
(22) Date of filing: 09.07.2025
(51) Int. Cl.: B60C 1/00, B60C 11/00

(54) **HEAVY DUTY TIRE**
SCHWERLASTREIFEN
PNEU POUR POIDS LOURDS

(30) Priority: 31.07.2024 JP 2024124642
(43) Date of publication of application: 04.02.2026
(73) Proprietor: Sumitomo Rubber Industries, Ltd., Kobe-shi, Hyogo 651-0072 (JP)
(72) Inventor: NAGAI, Haruka, Kobe-shi, 651-0072 (JP)
(74) Representative: Manitz Finsterwald Patent- und Rechtsanwaltspartnerschaft mbB

(56) References cited:
- EP-A1- 3 950 386
- EP-A1- 4 140 764
- JP-A- 2024 032 595

## Description

### BACKGROUND OF THE INVENTION

### Field of the Invention

The present invention relates to a heavy duty tire.

### Background Art

The tread portion of a heavy duty tire often has a plurality of circumferential grooves to form a plurality of land portions therein. During running, among the plurality of circumferential grooves, strain tends to be concentrated on the groove bottom of a circumferential groove located closer to a tread end more than on the groove bottom of a circumferential groove located closer to the tire equator. Therefore, the groove bottom of the circumferential groove located closer to the tread end may become cracked, and if this crack reaches the interior of the tread portion, a land portion located closer to the tread end may partially tear off, that is, so-called rib tear may occur.

As a method for improving the fracture strength of a heavy duty tire, there is a technique that micronizes or highly structures carbon black as in Japanese Laid-Open Patent Publication No. H06-279624, for example.

In addition, heavy duty tires are also required to have wet grip performance and low fuel consumption performance. A known heavy duty tire is disclosed in the document JP 2024-032595 A.

An object of the present invention is to provide a heavy duty tire having improved combined performance of wet grip performance, low fuel consumption performance, and rib tear resistance.

### SUMMARY OF THE INVENTION

The present invention is directed to a heavy duty tire having a tread portion, wherein
the tread portion includes at least a first layer forming a tread surface, a second layer adjacent to an inner side in a tire radial direction of the first layer, and a third layer adjacent to the inner side in the tire radial direction of the second layer,
each of the first layer, the second layer, and the third layer is composed of a rubber composition containing a rubber component and a filler, and
when contents of silica per 100 parts by mass of the rubber component in the rubber compositions constituting the first layer, the second layer, and the third layer are denoted by S1 (parts by mass), S2 (parts by mass), and S3 (parts by mass), respectively, a maximum value among S1, S2, and S3 is denoted by Sₘₐₓ, and a tire outer diameter is denoted by Dt (m), $S 1 \geq 0 , S 2 \geq 0 , S 3 \geq 0 , {S}_{max} > 30 , Dt > 0.80 , and {S}_{max} / Dt < 100 .$

According to the present invention, a heavy duty tire having improved wet grip performance, low fuel consumption performance, and rib tear resistance is provided.

### BRIEF DESCRIPTION OF THE DRAWINGS

FIG. 1 is a cross-sectional view in a tread width direction showing a half portion of a tread portion of a heavy duty pneumatic tire according to an embodiment of the present invention; and
FIG. 2 is a diagram showing a tire cross-sectional width Wt, a tire cross-sectional height Ht, and a tire outer diameter Dt in a cross-section of the tire.

### DETAILED DESCRIPTION

Hereinafter, a tire according to an embodiment of the present invention will be described. The tire of the present embodiment is a heavy duty tire having a tread portion, wherein: the tread portion includes at least a first layer forming a tread surface, a second layer adjacent to an inner side in a tire radial direction of the first layer, and a third layer adjacent to the inner side in the tire radial direction of the second layer; each of the first layer, the second layer, and the third layer is composed of a rubber composition containing a rubber component and a filler; and when contents of silica per 100 parts by mass of the rubber component in the rubber compositions constituting the first layer, the second layer, and the third layer are denoted by S1 (parts by mass), S2 (parts by mass), and S3 (parts by mass), respectively, a maximum value among S1, S2, and S3 is denoted by Sₘₐₓ, and a tire outer diameter is denoted by Dt (m), S1 ≥ 0, S2 ≥ 0, S3 ≥ 0, Sₘₐₓ > 30, Dt > 0.80, and Sₘₐₓ/Dt < 100.

Although not intended to be bound by a theory, the reason why the combined performance of wet grip performance, low fuel consumption performance, and rib tear resistance of the heavy duty tire is improved in the present invention can be considered to be as follows.

First, (1) since the tread portion includes at least the first layer forming the tread surface, the second layer adjacent to the inner side in the tire radial direction of the first layer, and the third layer adjacent to the inner side in the tire radial direction of the second layer, even if a tire groove bottom is cracked, this crack is less likely to reach the interior of the tread portion, so that occurrence of rib tear can be suppressed. In addition, (2) since Sₘₐₓ > 30, it is easier to increase the heat generation (tan δ) at around 0°C of the tread rubber, so that wet grip performance is improved. Furthermore, silica can also contribute to low fuel consumption performance. (3) Since Dt > 0.80, the tire outer diameter becomes larger to a certain degree, so that the tire is suitable to be mounted to an industrial vehicle such as a truck and a bus. (4) Since Sₘₐₓ/Dt < 100, the maximum value of the content of silica with respect to the tire outer diameter is a certain value or less, so that low fuel consumption performance is improved.

It is considered that the above (1) to (4) cooperate to achieve a notable effect of providing a heavy duty tire having improved wet grip performance, low fuel consumption performance, and rib tear resistance.

A rubber component constituting a layer corresponding to Sₘₐₓ preferably contains greater than 10% by mass and more preferably contains greater than 30% by mass of a styrene-butadiene rubber.

The rubber component constituting the layer corresponding to Sₘₐₓ preferably contains greater than 10% by mass and more preferably contains greater than 30% by mass of an isoprene-based rubber.

Silica is also considered to contribute to improvement of low fuel consumption performance and chemically bonds with a styrene-butadiene rubber or an isoprene-based rubber via a silane coupling agent to reinforce the rubber composition. Therefore, it is considered that when the layer having a highest silica content contains a certain amount or more of a styrene-butadiene rubber, the dispersibility of silica can be improved by styrene groups, and the flexibility of the rubber composition is improved, so that wet grip performance is further improved.

It is also considered that when the layer having a highest silica content contains a certain amount or more of an isoprene-based rubber, a phase of the isoprene-based rubber having relatively weak interaction with silica is formed in the rubber matrix, and the flexibility of the rubber composition is improved, so that wet grip performance is further improved.

The rubber component constituting the first layer preferably contains 1% by mass or more of a styrene-butadiene rubber.

It is considered that by the heat generation of styrene groups, 0°C tanδ of the first layer can be increased, and thus wet grip performance is further improved.

Preferably, S1 is greater than 30.

Since the first layer forming the tread surface contains greater than 30 parts by mass of silica, it is considered that the heat generation at around 0°C in the tread surface is improved, and thus the followability of the tire to a road surface is improved, so that wet grip performance is further improved.

Preferably, S1 is larger than S2 and S3, and more preferably, S1 > S2 > S3.

Since S1 is larger than S2 and S3, it is considered that the heat generation at around 0°C can be increased in the tread surface compared to the interior of the tread portion, and thus the followability of the tire to a road surface is improved, so that wet grip performance is further improved. In addition, since S1 > S2 > S3, it is considered that the above effect is further improved.

Preferably, Dt is 1.00 m or more. This is because it is more suitable to be mounted to an industrial vehicle.

Preferably, tanδ at 0°C (0°C tanδ1) of the rubber composition constituting the first layer is 0.21 or more from the viewpoint of further improving wet grip performance.

Preferably, 0°C tan δ1 × Dt is 0.190 or more.

It is considered that the larger Dt is, the more likely even an end portion of a land portion or a block portion is to cause energy loss due to deformation. Therefore, it is considered that by increasing the product of 0°C tanδ1 and Dt, energy loss can be caused even at the land portion or the block portion, thereby making it easier to improve wet grip performance after wear.

Preferably, a complex elastic modulus at 0°C (0°C E*1) of the rubber composition constituting the first layer is 15.0 MPa or more from the viewpoint of further improving wet grip performance.

Preferably, an elongation at break (EB 1) of the rubber composition constituting the first layer is 400% or more from the viewpoint of rib tear resistance.

By setting the elongation at break of the rubber composition constituting the first layer to be within the above range, it is considered that the surface state when the tire is worn is likely to be kept smoother, so that a reduction in the actual ground-contact area is suppressed, and as a result, a reduction in wet grip performance after tire wear can be suppressed.

### [Definitions]

The "tread portion" is a member that includes a portion forming the ground-contact surface of the tire. In the case of including a member forming a tire skeleton by steel or a textile material such as a belt layer, a belt reinforcement layer, and a carcass layer in a cross-section in the tire radial direction, the "tread portion" is a member placed outward of these members in the tire radial direction.

The "tire outer diameter Dt" refers to the outer diameter of the tire in a standardized state. In this specification, unless otherwise specified, the unit of Dt is "m".

The "standardized state" is a state where the tire is fitted on a standardized rim and filled with air at a standardized internal pressure and no load is applied to the tire. Unless otherwise specified, the tire is used in the standardized state.

The "standardized rim" is a rim that is defined, in a standard system including a standard on which the tire is based, by the standard for each tire, and refers to, for example, the standard rim at an applicable size described in "JATMA YEAR BOOK" in the JATMA (The Japan Automobile Tyre Manufacturers Association, Inc.) standard, the "Measuring Rim" described in "STANDARDS MANUAL" in the ETRTO (The European Tyre and Rim Technical Organisation) standard, or the "Design Rim" described in "YEAR BOOK" in the TRA (The Tire and Rim Association, Inc.) standard. Reference is made in the order of JATMA, ETRTO, and TRA, and if an applicable size is found at the time of reference, the standard therefor is followed. In the case of a tire that is not specified in the above standards, the "standardized rim" refers to a rim having the smallest rim width among rims having a minimum diameter that allows the rim to be fitted to the tire and allows the internal pressure to be maintained (i.e., no air leakage from between the rim and the tire is caused).

The "standardized internal pressure" is an air pressure that is defined, in a standard system including a standard on which the tire is based, by the standard for each tire, and refers to, for example, the "maximum air pressure" in the JATMA standard, the "INFLATION PRESSURE" in the ETRTO standard, or the maximum value indicated in the table "TIRE LOAD LIMITS AT VARIOUS COLD INFLATION PRESSURES" in the TRA standard. As in the case of the standardized rim, reference is made in the order of JATMA, ETRTO, and TRA, and if an applicable size is found at the time of reference, the standard therefor is followed. In the case of a tire that is not specified in the above standards, the "standardized internal pressure" refers to the standardized internal pressure (but 250 kPa or higher) at another tire size for which the standardized rim is listed as a standard rim (it should be noted that the size is specified in the standard), and if a plurality of standardized internal pressures of 250 kPa or higher are listed, the "standardized internal pressure" refers to the minimum value among them.

The "standardized load (kg)" is a load that is defined, in a standard system including a standard on which the tire is based, by the standard for each tire, and refers to, for example, the "maximum load capacity" in the JATMA standard, the "LOAD CAPACITY" in the ETRTO standard, or the maximum value indicated in the table "TIRE LOAD LIMITS AT VARIOUS COLD INFLATION PRESSURES" in the TRA standard. As in the cases of the standardized rim and the standardized internal pressure, reference is made in the order of JATMA, ETRTO, and TRA, and if an applicable size is found at the time of reference, the standard therefor is followed. In the case of a tire that is not specified in the above standards, a maximum load capacity W_{L} calculated separately is the standardized load.

The "maximum load capacity W_{L} (kg)" is calculated using the following calculation formula. "V" denotes the virtual volume of the tire (mm³), "Ht" denotes the cross-sectional height of the tire in the tire radial direction in a cross-section of the tire along a plane including the tire rotation axis (mm), and "Wt" denotes the cross-sectional width of the tire in the standardized state (mm). In the following calculation formula, the unit of Dt is mm. When the rim diameter for the tire is denoted by R, Ht can be obtained by (Dt - R)/2. In the case where there are any patterns, characters, etc., on the tire side surface, Wt is a value obtained by excluding the patterns, characters, etc. The maximum load capacity is synonymous with the standardized load. [Math.1] $\begin{matrix}{W}_{L} = 0 . 000011 \times V + 175 \\ V = \left\{{\left(Dt/2\right)}^{2}-{\left(Dt/2-Ht\right)}^{2}\right\} \times π \times Wt\end{matrix}$

The "circumferential groove" refers to a groove extending continuously in the tire circumferential direction. The circumferential groove may extend linearly along the circumferential direction or may extend in a wavy, sinusoidal, or zigzag manner.

The "thickness of each rubber layer constituting the tread portion" refers to the thickness, of each rubber layer forming the tread, in the tire radial direction on a tire equator plane. In the case where the tread is formed of a plurality of rubber layers, the total value of the thicknesses of these rubber layers is the "thickness of the tread portion". In the case where the tread has a groove on the tire equator plane, the thickness of the rubber layer at a center portion in the tire width direction of a land portion closest to the tire equator plane is used as the thickness of each rubber layer constituting the tread or the thickness of the tread portion.

The "loss tangent and the complex elastic modulus of the rubber composition" are a loss tangent (tanδ) and a complex elastic modulus E* (MPa) measured under each condition in tensile mode using a dynamic viscoelasticity measuring device (e.g., EPLEXOR series, manufactured by NETZSCH-Gerätebau GmbH). A sample used for dynamic viscoelasticity measurement is a vulcanized rubber composition with dimensions of 20 mm in length, 4 mm in width, and 1 mm in thickness. When creating a sample by cutting the sample from the tire, if the member from which the sample is created is the tread portion, a belt reinforcing layer, a belt layer, or an inner liner, the length direction of the sample is made to coincide with the tire circumferential direction, and the thickness direction of the sample is made to coincide with the tire radial direction.

The "0°C tanδ" and the "0°C E*" are respectively a loss tangent (tan δ) and a complex elastic modulus E* (MPa) measured under the conditions of a temperature of 0°C, a frequency of 10 Hz, an initial strain of 10%, a dynamic strain of ±2.5%, and tensile mode.

The "elongation at break EB of the rubber composition" is an elongation at break (%) obtained by producing a No. 7 dumbbell-shaped test piece with a thickness of 1 mm and conducting a tensile test at 23°C and a tensile speed of 3.3 mm/s in accordance with JIS K 6251: 2017.

The "styrene content" is calculated using thermal decomposition gas chromatography or NMR measurement (¹H-NMR or ¹³C-NMR). Unlike physical properties such as a complex elastic modulus (E*), a component content such as "styrene content" has a true value independent of a measurement method, and thus it is preferable to use a measurement method with as high accuracy as possible. In this specification, "thermal decomposition gas chromatography" refers to a method in which a sample is heated by a thermal decomposition apparatus, the individual components contained in the gas phase generated by this heating are separated by a separation column, and each isolated component is analyzed.

The "vinyl content (1,2-bond butadiene unit content)" is calculated using thermal decomposition gas chromatography or NMR measurement (¹H-NMR or ¹³C-NMR). Like the "styrene content", the "vinyl content" has a true value independent of a measurement method, and thus it is preferable to use a measurement method with as high accuracy as possible.

The "cis content (cis-1,4-bond butadiene unit content)" is a value measured using infrared absorption spectroscopy or NMR measurement (¹H-NMR or ¹³C-NMR) in accordance with JIS K 6239-2: 2017 and is applicable to a rubber component having repeating units derived from butadiene such as BR. Like the "styrene content", the "cis content" has a true value independent of a measurement method, and thus it is preferable to use a measurement method with as high accuracy as possible.

The "weight-average molecular weight (Mw)" can be obtained by conversion, based on a polystyrene standard, of a value measured by gel permeation chromatography (GPC) (e.g., GPC-8000 series manufactured by Tosoh Corporation, detector: differential refractometer, column: TSKgel SuperMultipore HZ-M). For example, the "weight-average molecular weight (Mw)" is applicable to SBR, BR, the plasticizer, etc.

The "glass transition temperature of the rubber component" is the static glass transition temperature of each rubber component obtained using a differential scanning calorimeter (e.g., Q200, manufactured by TAI Instruments Japan Inc.).

The "nitrogen adsorption specific surface area (N₂SA) of carbon black" is measured in accordance with JIS K 6217-2: 2017.

The "nitrogen adsorption specific surface area (N₂SA) of silica" is measured by the BET method in accordance with ASTM D3037-93.

The "average primary particle diameter" is a value obtained by photographing particles using a transmission or scanning electron microscope and calculating the arithmetic mean of the particle diameters of 400 particles. In the case where the particle shape is spherical, the diameter of the sphere is used as the particle diameter. If the particle shape is non-spherical, a circle equivalent diameter (a positive square root of {4 × (particle area)/π}) is calculated from a microscope image and used as the particle diameter.

The "plasticizer" is a material that imparts plasticity to the rubber component and is a component extracted from the rubber composition using acetone. In addition, the plasticizer includes a plasticizer that is liquid (in liquid form) at 25°C and a plasticizer that is solid at 25°C. However, the plasticizer does not include waxes and stearic acid that are commonly used in the tire industry.

The "content of the plasticizer" also includes the amount of a plasticizer in the rubber component extended by the plasticizer.

### [Tire]

Hereinafter, a tire according to an embodiment of the present invention will be described with reference to the drawings. The following embodiment is merely an example, and the tire of the present invention is not limited to the following embodiment.

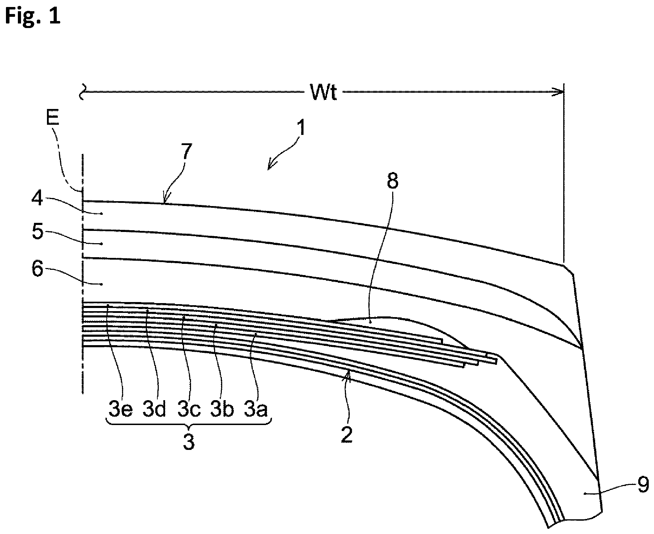

FIG. 1 shows a cross-sectional view in a tread width direction showing a half portion of a tread portion of a heavy duty pneumatic tire according to an embodiment of the present invention. In FIG. 1, the up-down direction is a tire radial direction, the right-left direction is a tire axial direction, and a direction perpendicular to the drawing sheet of FIG. 1 is a tire circumferential direction.

The tire in FIG. 1 includes a tread portion 1, a pair of sidewalls 9 placed on both sides of the tread portion 1, a carcass 2 having at least one layer, and a belt layer 3 having at least one layer and placed outward of the carcass 2 in the tire radial direction.

The tread portion 1 includes a first layer 4 forming a tread surface 7, a second layer 5 adjacent to the inner side in the tire radial direction of the first layer 4, and a third layer 6 adjacent to the inner side in the tire radial direction of the second layer 5. The tread portion 1 can further include a rubber layer between the third layer 6 and the belt layer 3 to be composed of four or more layers.

In FIG. 1, the carcass 2 is laminated in two layers, and the belt layer 3 is laminated in five layers, but the carcass 2 and the belt layer 3 are not limited to such configurations. In a heavy duty tire according to an embodiment of the present invention, it is preferable that a carcass and a belt layer each have two or more layers. In FIG. 1, a reinforcing rubber layer 8 is present between the third layer 6 and the belt layer 3, but the heavy duty tire of the present embodiment may or may not necessarily have a reinforcing rubber layer.

The tanδ at 0°C (0°C tanδ1) of a rubber composition constituting the first layer is preferably 0.18 or more, more preferably 0.19 or more, further preferably 0.20 or more, and particularly preferably 0.21 or more. In addition, the 0°C tanδ1 is preferably 0.45 or less, more preferably 0.40 or less, further preferably 0.35 or less, and particularly preferably 0.30 or less from the viewpoint of low fuel consumption performance at low temperatures. The tanδ at 0°C of each of rubber compositions constituting the second layer and the third layer is not particularly limited.

The 0°C tanδ of each rubber composition can be adjusted as appropriate based on the types and blending amounts of a rubber component, vulcanized rubber particles, a plasticizer, etc., described later. For example, the value of the 0°C tanδ can be decreased by reducing the content of silica or the plasticizer, while the value of the 0°C tanδ can be increased by increasing the content of silica or the plasticizer.

The complex elastic modulus at 0°C (0°C E*1) of the rubber composition constituting the first layer is preferably 15.0 MPa or more, more preferably 16.0 MPa or more, further preferably 17.5 MPa or more, and particularly preferably 18.0 MPa or more from the viewpoint of wet grip performance. In addition, the 0°C E*1 is preferably 50.0 MPa or less, more preferably 45.0 MPa or less, and further preferably 40.0 MPa or less. The E* at 0°C of each of the rubber compositions constituting the second layer and the third layer is not particularly limited. The 0°C E* of each rubber composition can be adjusted as appropriate based on the types and blending amounts of the rubber component, the vulcanized rubber particles, a resin, an oil, etc., described later.

The elongation at break (EB1) of the rubber composition constituting the first layer is preferably 400% or more, more preferably 410% or more, and further preferably 430% or more from the viewpoint of rib tear resistance. Meanwhile, the upper limit of EB1 is not particularly limited and can be, for example, 600% or less, 500% or less, or 480% or less.

The elongations at break (EB2 and EB3) of the rubber compositions constituting the second layer and the third layer are preferably 480% or more, more preferably 500% or more, and further preferably 510% or more. The upper limits of EB2 and EB3 are not particularly limited.

The elongation at break of each rubber composition can be adjusted based on the blending amount of the rubber component, the blending amount of the plasticizer, the type of the plasticizer, etc. For example, the elongation at break can be increased by reducing the content of an isoprene-based rubber.

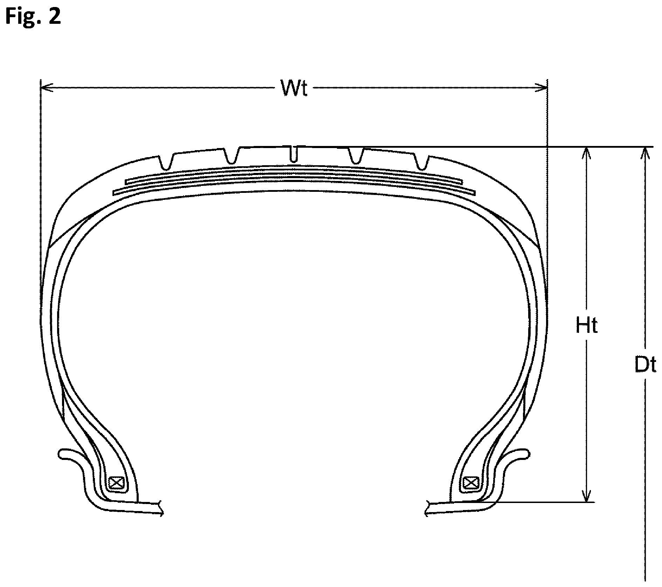

FIG. 2 is a diagram showing a tire cross-sectional width Wt, a tire cross-sectional height Ht, and a tire outer diameter Dt in a cross-section of the tire.

In the heavy duty tire according to the present embodiment, the tire outer diameter Dt is greater than 0.80 m, preferably 0.85 m or more, more preferably 0.88 m or more, further preferably 0.90 m or more, further preferably 0.92 m or more, further preferably 0.95m or more, particularly preferably 0.98 m or more, and most preferably 1.00 m or more. In addition, the tire outer diameter Dt is preferably less than 3.00 m, more preferably less than 2.50 m, and further preferably less than 2.00 m from the viewpoint of the effects of the present invention.

In the heavy duty tire according to the present embodiment, Sₘₐₓ/Dt is less than 100, preferably less than 90, more preferably less than 80, further preferably less than 70, and particularly preferably less than 60 from the viewpoint of the effects of the present invention.

0°C tan δ1 × Dt is preferably 0.190 or more, more preferably 0.200 or more, more preferably 0.210 or more, further preferably 0.214 or more, and particularly preferably 0.220 or more from the viewpoint of wet grip performance after wear. In addition, 0°C tan δ1 × Dt is preferably 0.500 or less, more preferably 0.450 or less, and further preferably 0.400 or less.

### [Rubber Composition]

The tread portion according to the present embodiment includes at least three layers: a first layer, a second layer adjacent to the inner side in the tire radial direction of the first layer, and a third layer adjacent to the inner side in the tire radial direction of the second layer, and each of the first layer, the second layer, and the third layer is composed of a rubber composition containing a rubber component and a filler. When the contents of silica per 100 parts by mass of the rubber component in the rubber compositions constituting the first layer, the second layer, and the third layer are denoted by S1 (parts by mass), S2 (parts by mass), and S3 (parts by mass), respectively, and a maximum value among S1, S2, and S3 is denoted by Sₘₐₓ, S1 ≥ 0, S2 ≥ 0, S3 ≥ 0, and Sₘₐₓ > 30. The rubber composition constituting each layer of the tread portion can be produced using raw materials described below, in accordance with the required 0°C tanδ, 0°C E*, elongation at break, etc. Hereinafter, the rubber compositions according to the present embodiment will be described.

### <Rubber Component>

Each of the rubber compositions according to the present embodiment preferably contains a diene-based rubber as the rubber component and more preferably contains at least one selected from the group consisting of an isoprene-based rubber, a styrene-butadiene rubber (SBR), and a butadiene rubber (BR). The rubber composition constituting the first layer preferably contains an isoprene-based rubber, and more preferably contains an isoprene-based rubber and a BR, as the rubber component. The rubber composition constituting the second layer preferably contains an isoprene-based rubber, and more preferably contains an isoprene-based rubber and a BR, as the rubber component, and may contain only an isoprene-based rubber and BR as the rubber component. The rubber composition constituting the third layer preferably contains an isoprene-based rubber and may contain only an isoprene-based rubber as the rubber component. In addition, these rubber components may be modified with functional groups capable of interacting with a filler component such as silica or carbon black, or from the viewpoint of optimizing a crosslinking form and suppressing deterioration, some of unsaturated bond portions may be hydrogenated to form saturated bonds.

As the diene-based rubber, any diene-based rubbers that are commonly used in the tire industry are suitable for use. Specific examples of the diene-based rubber include isoprene-based rubber, butadiene rubber (BR), styrene-butadiene rubber (SBR), styrene-isoprene rubber (SIR), styrene-isoprene-butadiene rubber (SIBR), chloroprene rubber (CR), and acrylonitrile-butadiene rubber (NBR). One of these diene-based rubbers may be used alone, or two or more of these diene-based rubbers may be used in combination.

The content of the diene-based rubber in the rubber component is preferably greater than 70% by mass, more preferably greater than 80% by mass, further preferably greater than 90% by mass, and particularly preferably greater than 95% by mass.

### (Isoprene-Based Rubber)

As the isoprene-based rubber, for example, rubbers that are generally used in the tire industry, such as isoprene rubber (IR) and natural rubber, can be used. Examples of the natural rubber include unmodified natural rubber (NR) as well as modified natural rubbers such as epoxidized natural rubber (ENR), hydrogenated natural rubber (HNR), deproteinized natural rubber (DPNR), ultra-pure natural rubber, and grafted natural rubber. One of these isoprene-based rubbers may be used alone, or two or more of these isoprene-based rubbers may be used in combination.

The NR is not particularly limited, NRs that are generally used in the tire industry can be used, and examples of the NR include SIR20, RSS#3, and TSR20.

The content of the isoprene-based rubber in the rubber component constituting the first layer is preferably 50% by mass or more, more preferably 55% by mass or more, further preferably 60% by mass or more, and particularly preferably 65% by mass or more from the viewpoint of wet grip performance. In addition, the content of the isoprene-based rubber is preferably less than 100% by mass, more preferably 90% by mass or less, and further preferably 80% by mass or less from the viewpoint of containing an SBR and obtaining the dispersibility of silica due to styrene groups.

The content of the isoprene-based rubber in the rubber component constituting the second layer is preferably 60% by mass or more, more preferably 70% by mass or more, and further preferably 80% by mass or more from the viewpoint of low fuel consumption performance. The content of the isoprene-based rubber in the rubber component constituting the third layer is preferably 80% by mass or more, more preferably 90% by mass or more, and further preferably 95% by mass or more.

The content of the isoprene-based rubber in the rubber component constituting a layer corresponding to Sₘₐₓ is preferably greater than 5% by mass, more preferably greater than 10% by mass, further preferably greater than 20% by mass, and particularly preferably greater than 30% by mass from the viewpoint of wet grip performance.

### (BR)

The BR is not particularly limited, and, for example, BRs that are generally used in the tire industry, such as a BR having a cis content of less than 50% by mole (low-cis BR), a BR having a cis content of 90% by mole or more (high-cis BR), a rare-earth element-based butadiene rubber synthesized using a rare-earth element-based catalyst (rare-earth element-based BR), a BR containing syndiotactic polybutadiene crystals (SPB-containing BR), and modified BRs (modified high-cis BR, modified low-cis BR), can be used. One of these BRs may be used alone, or two or more of these BRs may be used in combination.

As the high-cis BR, for example, products commercially available from Zeon Corporation, Ube Corporation, JSR Corporation, etc., can be used. By containing the high-cis BR, low-temperature characteristics and wear resistance can be improved. The cis content of the high-cis BR is preferably greater than 95% by mole, more preferably greater than 96% by mole, and further preferably greater than 97% by mole. The cis content of the BR is measured by the above measurement method.

The rare-earth element-based BR is synthesized using a rare earth element-based catalyst, and the vinyl content of the rare-earth element-based BR is preferably less than 1.8% by mole, more preferably less than 1.6% by mole, and further preferably 1.5% by mole or less, and the cis content of the rare-earth element-based BR is preferably greater than 95% by mole, more preferably greater than 96% by mole, and further preferably 97% by mole or more. As the rare-earth element-based BR, for example, products commercially available from LANXESS, etc., can be used.

An example of the SPB-containing BR is not a BR in which 1,2-syndiotactic polybutadiene crystals are merely dispersed, but a BR in which 1,2-syndiotactic polybutadiene crystals are dispersed in a state of being chemically bound to the BR. As such an SPB-containing BR, products commercially available from Ube Corporation, etc., can be used.

As the modified BRs, for example, modified butadiene rubbers (modified BRs) whose terminals and/or main chains are modified with functional groups including at least one element selected from the group consisting of silicon, nitrogen, and oxygen, are suitable for use.

Examples of other modified BRs include a BR that is obtained by polymerizing 1,3-butadiene with a lithium initiator and then adding a tin compound to the polymerized 1,3-butadiene and in which the terminals of the modified BR molecules are bound to each other through tin-carbon bonds (tin-modified BR). In addition, the modified BR may be either hydrogenated or non-hydrogenated.

The weight-average molecular weight (Mw) of the BR is preferably greater than 300 thousand, more preferably greater than 350 thousand, and further preferably greater than 400 thousand from the viewpoint of wear resistance. In addition, the Mw of the BR is preferably less than 2 million, more preferably less than 1 million, and further preferably less than 500 thousand from the viewpoint of crosslink uniformity, etc. The Mw can be obtained by the above method.

The content of the BR in the rubber component constituting the first layer is preferably 5% by mass or more, more preferably 10% by mass or more, and further preferably 15% by mass or more. In addition, the content of the BR in the rubber component constituting the first layer is preferably 50% by mass or less, more preferably 45% by mass or less, and further preferably 40% by mass or less.

The content of the BR in the rubber component constituting the second layer is preferably 5% by mass or more, more preferably 10% by mass or more, and further preferably 15% by mass or more. In addition, this content is preferably 40% by mass or less, more preferably 30% by mass or less, and further preferably 25% by mass or less. The content of the BR in the rubber component constituting the third layer is not particularly limited, and the BR may not necessarily be contained therein.

### (SBR)

The SBR is not particularly limited, and examples of the SBR include solution-polymerized SBRs (S-SBRs), emulsion-polymerized SBRs (E-SBRs), and modified SBRs thereof (modified S-SBRs and modified E-SBRs). Examples of the modified SBRs include an SBR whose terminals and/or main chain is modified, and a modified SBR (a condensate, one having a branch structure, etc.) coupled with tin, a silicon compound, or the like. Furthermore, hydrogenated products of these SBRs (hydrogenated SBRs), etc., may also be used. One of these SBRs may be used alone, or two or more of these SBRs may be used in combination.

As the SBR, an oil-extended SBR can also be used, or a non-oil-extended SBR can also be used. In this specification, as the SBR, products commercially available from JSR Corporation, SUMITOMO CHEMICAL COMPANY, LIMITED, Ube Corporation, Asahi Kasei Corporation, ZS Elastomer Co., Ltd., ARLANXEO, etc., can be used.

The styrene content of the SBR is preferably greater than 5% by mass, more preferably greater than 8% by mass, and further preferably greater than 9% by mass. Meanwhile, the styrene content of the SBR is preferably less than 30% by mass, more preferably less than 20% by mass, and further preferably less than 15% by mass. In this specification, the styrene content of the SBR is measured by the above measurement method.

The vinyl content of the SBR is preferably greater than 20% by mole, more preferably greater than 30% by mole, and further preferably greater than 40% by mole. In addition, the vinyl content of the SBR is preferably less than 70% by mole, more preferably less than 65% by mole, and further preferably less than 60 % by mole. In this specification, the vinyl content of the SBR is measured by the above measurement method.

The glass transition temperature (Tg) of the SBR is preferably -80°C or higher, more preferably -70°C or higher, and further preferably -65°C or higher from the viewpoint of wet grip performance. In addition, the Tg of the SBR is preferably -40°C or lower, more preferably -45°C or lower, further preferably -50°C or lower, and further preferably -55°C or lower from the viewpoint of low fuel consumption performance.

The content of the SBR in the rubber component constituting the first layer is preferably 1% by mass or more, more preferably 5% by mass or more, further preferably 10% by mass or more, and particularly preferably 20% by mass or more from the viewpoint of improving the dispersibility of silica. In addition, the content of the SBR in the rubber component is preferably 50% by mass or less, more preferably 40% by mass or less, and further preferably 30% by mass or less. The content of the SBR in each of the rubber components constituting the second layer and the third layer is not particularly limited, and the SBR may not necessarily be contained therein.

The content of the SBR in the rubber component constituting the layer corresponding to Sₘₐₓ is preferably greater than 1% by mass, more preferably greater than 5% by mass, further preferably greater than 10% by mass, and particularly preferably greater than 30% by mass from the viewpoint of improving the dispersibility of silica.

### (Other Rubber Components)

The rubber component may contain rubber components other than diene-based rubbers (non-diene-based rubbers) as long as the effects of the invention are not affected. As the non-diene-based rubbers, rubber components that are generally used in the tire industry can be used, and examples of the non-diene-based rubbers include butyl-based rubbers, ethylenepropylene rubber, polynorbornene rubber, silicone rubber, chlorinated polyethylene rubber, fluororubber (FKM), acrylic rubber (ACM), and hydrin rubber. One of these other rubber components may be used alone, or two or more of these other rubber components may be used in combination. In addition to the above rubber component, a known thermoplastic elastomer may be contained or may not necessarily be contained.

### (Rubber Components Synthesized from Recycled or Biomass-Derived Raw Materials)

The monomers that are structural units of synthetic rubbers such as IR, SBR, and BR may be derived from underground resources such as petroleum or natural gas or may be recycled from rubber products such as tires or non-rubber products such as polystyrene. Monomers (recycled monomers) obtained through recycling are not particularly limited and examples thereof include recycled polyisoprene, recycled butadiene, and recycled aromatic vinyl compounds. Examples of the above butadiene include 1,2-butadiene and 1,3-butadiene. The above aromatic vinyl compounds are not particularly limited, and examples thereof include styrene. Among these, it is preferable to use recycled polyisoprene, recycled butadiene, and/or recycled styrene as raw materials.

A method for producing recycled monomers is not particularly limited, and examples thereof include synthesis from recycled naphtha obtained by decomposing rubber products such as tires. A method for producing recycled naphtha is not particularly limited, and rubber products such as tires may be decomposed under high temperature and high pressure or may be decomposed by microwave, or extraction may be performed after mechanical crushing.

Furthermore, the monomers that are structural units of polymers such as IR, SBR, and BR may be derived from biomass. In this specification, biomass refers to substances derived from natural resources such as plants. Biomass is not particularly limited, and examples thereof include agricultural, forestry, and fishery products, sugars, wood chips, plant residues after extraction of useful components, plant-derived ethanol, and biomass naphtha.

Biomass-derived monomers (biomass monomers) are not particularly limited, and examples thereof include biomass-derived butadiene and biomass-derived aromatic vinyl compounds. Examples of the above butadiene include 1,2-butadiene and 1,3-butadiene. The above aromatic vinyl compounds are not particularly limited, and examples thereof include styrene. A method for producing biomass monomers is not particularly limited and examples thereof include biological and/or chemical and/or physical conversion of plants and animals. Biological conversion is typically fermentation by microorganisms, and examples of chemical and/or physical conversion include conversion by catalysts, high heat, high pressure, electromagnetic waves, and critical fluids, and combinations thereof.

The polymers (biomass polymers) synthesized from biomass monomer components are not particularly limited, and examples thereof include polybutadiene rubbers synthesized from biomass-derived butadiene, and aromatic vinyl/butadiene copolymers synthesized from biomass-derived butadiene and/or biomass-derived aromatic vinyl compounds. Examples of the aromatic vinyl/butadiene copolymers include styrene-butadiene rubbers synthesized from biomass-derived butadiene and/or biomass-derived styrene.

Whether the raw material for the polymer is derived from biomass can be determined by measuring pMC (percent Modern Carbon) in accordance with ASTM D6866-10. pMC is the ratio of the ¹⁴C concentration of a sample to the ¹⁴C concentration of a standard modern carbon (modern standard reference) and is a value used as an indicator of the biomass ratio of the compound. The significance of this value will be described below.

One mole of carbon atoms (6.02 × 10²³ atoms) contains approximately 6.02 × 10^{11 14}C atoms, which is about one trillionth of the number of normal carbon atoms. The half-life of ¹⁴C is 5,730 years, and ¹⁴C decreases regularly. Therefore, in fossil fuels such as coal, petroleum, and natural gas, which are believed to have been formed more than 226,000 years ago after carbon dioxide and other substances in the atmosphere were absorbed and fixed by plants, etc., all of the ¹⁴C elements that were originally contained at the time of fixation have decayed. Thus, at the present which is the 21st century, fossil fuels such as coal, petroleum, and natural gas contain no ¹⁴C elements at all. Therefore, chemical substances produced from these fossil fuels as raw materials also contain no ¹⁴C at all.

Meanwhile, ¹⁴C is continuously generated by cosmic rays undergoing nuclear reactions in the atmosphere. Therefore, the amount of ¹⁴C in the Earth's atmospheric environment remains constant due to the balance between its decrease through radioactive decay and its generation through nuclear reactions. Therefore, the ¹⁴C concentration of substances derived from biomass resources circulating in the current environment is approximately 1 × 10⁻¹²% by mole of the total carbon atoms, as described above. Therefore, the difference between these values can be used to calculate the biomass ratio in a compound.

This ¹⁴C is generally measured as follows. Using accelerator mass spectrometry based on a tandem accelerator, the concentrations of ¹³C (¹³C/¹²C) and ¹⁴C (¹⁴C/¹²C) are measured. In the measurement, the ¹⁴C concentration in the circulating carbon in the natural environment at the time of 1950 is adopted as the modern standard reference for the ¹⁴C concentration. As a specific standard material, the oxalic acid standard provided by the National Institute of Standards and Technology (NIST) is used. The specific radioactivity of carbon (the radioactivity intensity of ¹⁴C per 1 g of carbon) in the oxalic acid is separated for each carbon isotope, corrected to a certain value for ¹³C, and the value obtained after applying decay correction from 1950 to the measurement date is used as a standard ¹⁴C concentration value (100%). The ratio of this value to the value measured in the actual sample is a pMC value.

Therefore, if a rubber is produced from 100% biomass-derived materials, although there may be regional differences, etc., the pMC value currently does not reach 100 under normal conditions in many cases and thus indicates approximately 110 pMC. Meanwhile, when the ¹⁴C concentration of a chemical substance derived from fossil fuels such as petroleum is measured, the pMC value indicates approximately 0 pMC (e.g., 0.3 pMC). This value corresponds to the biomass ratio of 0% described above.

Based on the above, using a material such as rubber with high pMC values, that is, a material such as rubber with high biomass ratios, in a rubber composition is environmentally suitable.

### [Filler]

The rubber composition according to the present embodiment contains a filler. The rubber composition preferably contains silica, and more preferably contains carbon black and silica, as the filler. In addition, the filler may be a filler composed only of carbon black and silica.

### <Silica>

The silica is not particularly limited, and for example, silicas that are generally used in the tire industry, such as a silica prepared by a dry process (anhydrous silica) and a silica prepared by a wet process (hydrous silica), can be used. The raw material for the silica is not particularly limited and may be a mineral-derived raw material such as quartz or may be a biologically-derived raw material (e.g., a silica derived from biomass materials such as rice husks, etc.), and a silica recycled from silica-containing products may be used. Among them, a hydrous silica prepared by a wet process is preferable because of a high silanol group content thereof. One of these silicas may be used alone, or two or more of these silicas may be used in combination.

Silica made from biomass materials can be produced, for example, by: extracting silicates from rice husk ash obtained by burning rice husks, using a sodium hydroxide solution; reacting the silicates with sulfuric acid in the same manner as conventional wet-processed silica to produce a silicon dioxide precipitate; and then filtering, washing with water, drying, and crushing the precipitate.

As silica recycled from silica-containing products, for example, silica recovered from products containing silica such as electronic components (e.g., semiconductors), tires, desiccants, and filter materials such as diatomaceous earth can be used. A method of the recovery is not particularly limited, and examples thereof include thermal decomposition and decomposition by electromagnetic waves. Among them, silica recovered from electronic components such as semiconductors or tires is preferable.

When silica crystallizes, the silica does not dissolve in water, so that silicic acid, which is a component thereof, cannot be used. By controlling combustion temperature and time, crystallization of silica in rice husk ash can be suppressed (see Japanese Laid-Open Patent Publication No. 2009-2594, Akita Prefectural University Web Journal B/2019, Vol. 6, pp. 216-222, etc.). As amorphous silica extracted from rice husks, products commercially available from Wilmar International Limited, etc., can be used.

The nitrogen adsorption specific surface area (N₂SA) of the silica is preferably greater than 100 m²/g, more preferably greater than 120 m²/g, and further preferably greater than 150 m²/g from the viewpoint of reinforcing properties. In addition, the N₂SA of the silica is preferably less than 300 m²/g, more preferably less than 280 m²/g, and further preferably less than 250 m²/g from the viewpoint of heat generation properties and processability. The N₂SA of the silica is measured by the above measurement method.

The average primary particle diameter of the silica contained in the rubber composition constituting the first layer is preferably greater than 8 nm, more preferably greater than 10 nm, and further preferably greater than 12 nm. In addition, this average primary particle diameter is preferably less than 25 nm, more preferably less than 22 nm, further preferably less than 20 nm, further preferably less than 18 nm, and particularly preferably less than 16 nm. The average primary particle diameter of the silica is measured by the above measurement method.

The average primary particle diameter of the silica contained in each of the rubber compositions constituting the second layer and the third layer is preferably greater than 12 nm, more preferably greater than 14 nm, and further preferably greater than 15 nm. In addition, this average primary particle diameter is preferably less than 25 nm, more preferably less than 22 nm, and further preferably less than 20 nm. The average primary particle diameter of the silica is measured by the above measurement method.

The content S1 of the silica per 100 parts by mass of the rubber component in the rubber composition constituting the first layer is 0 or more, preferably greater than 10, more preferably greater than 20, and further preferably greater than 30. In addition, the content S1 is preferably less than 80, more preferably less than 70, further preferably less than 60, and particularly preferably less than 50 from the viewpoint of rib tear resistance.

The content S2 of the silica per 100 parts by mass of the rubber component in the rubber composition constituting the second layer is 0 or more, preferably greater than 3, more preferably greater than 5, and further preferably greater than 8. In addition, the content S2 is preferably less than 60, more preferably less than 50, and further preferably less than 40 from the viewpoint of rib tear resistance.

The content S3 of the silica per 100 parts by mass of the rubber component in the rubber composition constituting the third layer is 0 or more, preferably greater than 1, more preferably greater than 2, and further preferably greater than 4. In addition, the content S3 is preferably less than 40, more preferably less than 20, and further preferably less than 10 from the viewpoint of rib tear resistance.

In the heavy duty tire according to the present embodiment, the maximum value Sₘₐₓ among S1, S2, and S3 is greater than 30 and preferably 31 or more. In addition, the maximum value Sₘₐₓ is preferably less than 120, more preferably less than 100, and further preferably less than 80.

S1 is preferably larger than S2 and S3, S2 is preferably larger than S3, and S1 > S2 > S3 is further preferable.

### <Silane Coupling Agent>

The silica is preferably used in combination with a silane coupling agent. The silane coupling agent is not particularly limited, and examples of the silane coupling agent include: sulfide-based silane coupling agents such as bis(3-triethoxysilylpropyl)disulfide and bis(3-triethoxysilylpropyl)tetrasulfide; mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among these silane coupling agents, it is preferable to contain a sulfide-based silane coupling agent and/or a mercapto-based silane coupling agent. As the silane coupling agent, for example, products commercially available from Evonik Industries AG, Momentive Performance Materials, Inc., etc., can be used. One of these silane coupling agents may be used alone, or two or more of these silane coupling agents may be used in combination.

The content of the silane coupling agent per 100 parts by mass of the silica is preferably greater than 3 parts by mass, more preferably greater than 6 parts by mass, and further preferably greater than 9 parts by mass from the viewpoint of enhancing the dispersibility of the silica. The content of the silane coupling agent per 100 parts by mass of the silica is preferably less than 30 parts by mass, more preferably less than 20 parts by mass, and further preferably less than 15 parts by mass from the viewpoint of cost and processability.

The content of the silane coupling agent (in the case where a plurality of silane coupling agents are used in combination, the total content thereof) per 100 parts by mass of the rubber component is preferably greater than 1 part by mass, more preferably greater than 2 parts by mass, and further preferably 3 parts by mass or more from the viewpoint of enhancing the dispersibility of the silica. In addition, the content of the silane coupling agent is preferably less than 15 parts by mass, more preferably less than 10 parts by mass, and particularly preferably less than 5 parts by mass from the viewpoint of preventing a decrease in wear resistance.

### <Carbon Black>

The carbon black is not particularly limited, and examples of the carbon black include N134, N110, N220, N234, N219, N339, N330, N326, N351, N550, and N762. The raw material for the carbon black may be a biomass material such as lignin and plant oil or may be pyrolysis oil obtained by thermal decomposition of waste tires. A method for producing the carbon black may be a method by combustion such as a furnace method, may be a method by hydrothermal carbonization (HTC), or may be a method by thermal decomposition of methane such as a thermal black method. As commercially available products, products of Asahi Carbon Co., Ltd., Cabot Japan K.K., Tokai Carbon Co., Ltd., Mitsubishi Chemical Corporation, Lion Corporation, NSCC Carbon Co., Ltd., Columbian Carbon Co., etc., can be used. One of these carbon blacks may be used alone, or two or more of these carbon blacks may be used in combination.

In addition to the above, carbon black made from biomass materials such as lignin, or recycled carbon black obtained by thermal decomposition of products containing carbon black, such as tires, and purification may be used from the viewpoint of life cycle assessment.

In this specification, the "recycled carbon black" refers to carbon black that is obtained by crushing used tires or other products including carbon black, and calcining the crushed material, and for which, when oxidatively combusted by heating in air using a thermal gravimetric analysis method that complies with JIS K 6226-2: 2003, the proportion of the mass of ash (ash content) which is a non-combustible component is 13% by mass or more. That is, the proportion of the mass (carbon content) that is the weight loss due to the oxidation combustion of the recycled carbon black is 87% by mass or less. The recycled carbon black is sometimes denoted as rCB.

The recycled carbon black can be obtained from a thermal decomposition process of used pneumatic tires. For example, the specification of European Patent Application Publication No. 3427975 mentions "Rubber Chemistry and Technology", Vol. 85, No. 3, pp. 408-449 (2012), particularly pp. 438, 440, and 442, and states that recycled carbon black is obtained by thermal decomposition of organic materials at 550 to 800°C in an oxygen-free atmosphere, or by vacuum thermal decomposition at relatively low temperatures ([0027]). The carbon black obtained from such a thermal decomposition process, as mentioned in [0004] of Japanese Patent No. 6856781, normally lacks functional groups on the surface thereof (Comparison of surface morphology and chemistry between pyrolytic carbon black and commercially available carbon black, Powder Technology 160 (2005) 190-193).

The recycled carbon black may be carbon black that lacks functional groups on the surface thereof or may be carbon black that is treated to include a functional group on the surface thereof. The treatment to be performed to include a functional group on the surface of recycled carbon black can be carried out by a normal method. For example, in the specification of European Patent Application Publication No. 3173251, carbon black obtained from a thermal decomposition process is treated with potassium permanganate under acidic conditions to obtain carbon black including a hydroxyl and/or carboxyl group on the surface thereof. Furthermore, in Japanese Patent No. 6856781, carbon black obtained from a thermal decomposition process is treated with an amino acid compound including at least one thiol group or disulfide group to obtain carbon black whose surface is activated. The recycled carbon black according to the present embodiment also includes carbon black that is treated to include a functional group on the surface thereof.

As the recycled carbon black, products commercially available from Strable Green Carbon Co., Ltd., LD Carbon Co., Ltd., etc., can be used.

The nitrogen adsorption specific surface area (N₂SA) of the carbon black is preferably greater than 50 m²/g, more preferably greater than 70 m²/g, further preferably greater than 100 m²/g, and particularly preferably greater than 120 m²/g from the viewpoint of reinforcing properties. In addition, the N₂SA of the carbon black is preferably less than 250 m²/g, more preferably less than 200 m²/g, and further preferably less than 180 m²/g from the viewpoint of heat generation properties and processability. The N₂SA of the carbon black is measured by the above measurement method.

The average primary particle diameter of the carbon black contained in the rubber composition constituting the first layer is preferably greater than 8 nm, more preferably greater than 10 nm, and further preferably greater than 15 nm. In addition, this average primary particle diameter is preferably less than 25 nm, more preferably less than 22 nm, and further preferably less than 20 nm. The average primary particle diameter of the carbon black is measured by the above measurement method.

The average primary particle diameter of the carbon black contained in the rubber compositions constituting the second layer and the third layer is preferably greater than 15 nm, more preferably greater than 18 nm, and further preferably greater than 20 nm. In addition, this average primary particle diameter is preferably less than 40 nm, more preferably less than 35 nm, and further preferably less than 31 nm.

The content of the carbon black per 100 parts by mass of the rubber component is preferably greater than 8 parts by mass, more preferably greater than 15 parts by mass, further preferably greater than 20 parts by mass, and particularly preferably greater than 25 parts by mass. In addition, the content of the carbon black per 100 parts by mass of the rubber component is preferably less than 100 parts by mass, more preferably less than 80 parts by mass, and further preferably less than 50 parts by mass.

### <Other Fillers>

The filler may include another filler other than the silica and the carbon black. The other filler is not particularly limited, and for example, a filler that is conventionally and generally used in the tire industry, such as aluminum hydroxide, calcium carbonate, alumina, clay, and talc, can be contained.

### [Other Ingredients]

In addition to the rubber component and the filler, each rubber composition can contain ingredients that are conventionally and generally used in the tire industry, such as a plasticizer, a processing aid, vulcanized rubber particles, a wax, stearic acid, zinc oxide, an antioxidant, a vulcanizing agent, and a vulcanization accelerator, as appropriate.

### <Plasticizer>

The plasticizer is a material that imparts plasticity to the rubber component and is a concept including both a plasticizer that is liquid at 25°C and a plasticizer that is solid at 25°C. Examples of the plasticizer include resins, oils, liquid rubbers, and ester-based plasticizers. These plasticizers may be derived from mineral resources such as petroleum or natural gas, may be derived from biomass, or may be derived from naphtha recycled from rubber products or non-rubber products. In addition, low-molecular-weight hydrocarbon components obtained by thermal decomposition or extraction of used tires or products including various components may be used as plasticizers. One of these plasticizers may be used alone, or two or more of these plasticizers may be used in combination.

### (Resin)

The rubber composition preferably contains a resin among the above other ingredients. The resin is not particularly limited, a resin that is commonly used in the tire industry can be used, and examples of such a resin include an aromatic vinyl-based resin, a dicyclopentadiene-based resin, a C9-based resin, a C5-based resin, a C5C9-based resin, a terpene-based resin, a rosin-based resin, and a phenol-based resin. Among them, a petroleum resin, an aromatic vinyl-based resin, a dicyclopentadiene-based resin, a C9-based resin, and a terpene-based resin are preferable. One of these resins may be used alone, or two or more of these resins may be used in combination.

### <<Aromatic Vinyl-Based Resin>>

The "aromatic vinyl-based resin" refers to a resin including at least one aromatic vinyl compound selected from the group consisting of styrene, α-methylstyrene, vinyl toluene, p-chlorostyrene, etc., as a monomer component having a highest content, preferably including 50% by mole or more of the aromatic vinyl compound, and may be a hydrogenated or modified product of the resin. As the aromatic vinyl-based resin, for the reasons that the resin is economic, is easily processed, and has excellent heat generation properties, an α-methylstyrene or styrene homopolymer or a copolymer of α-methylstyrene and styrene is preferable, and a copolymer of α-methylstyrene and styrene is more preferable. As the aromatic vinyl-based resin, for example, products commercially available from Kraton Corporation, Eastman Chemical Company, Mitsui Chemicals, Inc., etc., can be used. One of these resins may be used alone, or two or more of these resins may be used in combination.

### <<Dicyclopentadiene-Based Resin>>

The "dicyclopentadiene-based resin" refers to a resin including dicyclopentadiene (DCPD) as a monomer component having a highest content and may be a hydrogenated or modified product of the resin. Examples of the dicyclopentadiene-based resin include a DCPD/C9 resin obtained by copolymerizing dicyclopentadiene and a C9 fraction, and a DCPD/C9 resin is preferable. As the DCPD resin, for example, products commercially available from Exxon Mobil Corporation, ENEOS Corporation, Zeon Corporation, Maruzen Petrochemical Co., Ltd., etc., can be used. One of these resins may be used alone, or two or more of these resins may be used in combination.

### <<C9-Based Resin>>

The "C9-based resin" refers to a resin obtained by polymerizing a C9 fraction and may be either a resin obtained by polymerizing the C9 fraction alone or a copolymer obtained by copolymerizing the C9 fraction and another component. For example, a resin obtained by copolymerizing dicyclopentadiene (DCPD) and the C9 fraction is called a DCPD/C9 resin. In addition, the C9-based resin may be a hydrogenated or modified product of one of these resins. Examples of the C9 fraction include at least one petroleum fraction having 8 to 10 carbon atoms selected from the group consisting of vinyl toluene, alkylstyrene, coumarone, indene, methylindene, dicyclopentadiene, etc. Specific examples of the C9-based resin include coumarone-indene resins, coumarone resins, and indene resins. One of these resins may be used alone, or two or more of these resins may be used in combination.

### <<C5-Based Resin>>

In this specification, the "C5-based resin" refers to a resin obtained by polymerizing a C5 fraction other than dicyclopentadiene and may be a hydrogenated or modified product of the resin. Examples of the C5 fraction other than dicyclopentadiene include at least one petroleum fraction having 4 to 5 carbon atoms selected from the group consisting of cyclopentadiene, isoprene, pentane, isopentane, neopentane, pentene, pentadiene, etc. One of these resins may be used alone, or two or more of these resins may be used in combination.

### <<C5C9-Based Resin>>

The "C5 C9-based resin" refers to a resin obtained by copolymerizing the above C5 fraction and the above C9 fraction and may be a hydrogenated or modified product of the resin. As the C5C9-based resin, for example, products commercially available from Tosoh Corporation, Zibo Luhua Hongjin New Material Co., Ltd., etc., can be used. One of these resins may be used alone, or two or more of these resins may be used in combination.

### <<Terpene-Based Resin>>

The terpene-based resin refers to a resin including at least one terpene compound selected from the group consisting of α-pinene, β-pinene, limonene, dipentene, etc., as a monomer component having a highest content, and preferably including 50% by mole or more of the terpene compound, and may be a hydrogenated or modified product of the resin. Specific examples of the terpene-based resin include: a polyterpene resin including only one or more of the terpene compounds as a monomer component; an aromatic modified terpene resin including the terpene compound and an aromatic compound as a monomer component; and a terpene-phenol resin including the terpene compound and a phenol-based compound as a monomer component. Examples of the aromatic compound that serves as the monomer component of the aromatic modified terpene resin include at least one selected from the group consisting of styrene, α-methylstyrene, vinyl toluene, divinyl toluene, etc. Examples of the phenol-based compound that serves as the monomer component of the terpene-phenol resin include at least one selected from the group consisting of phenol, bisphenol A, cresol, xylenol, etc. One of these resins may be used alone, or two or more of these resins may be used in combination.

### <<Rosin-Based Resin>>

The rosin-based resin refers to a resin including at least one rosin acid compound selected from the group consisting of abietic acid, neoabietic acid, palustric acid, isopimaric acid, etc., and may be a hydrogenated or modified product of the resin. The rosin-based resin is not particularly limited, and examples of the rosin-based resin include natural resin rosins, and rosin-modified resins modified by hydrogenation, disproportionation, dimerization, esterification, etc., of the natural resin rosins. One of these resins may be used alone, or two or more of these resins may be used in combination.

### <<Phenol-Based Resin>>

The phenol-based resin refers to a resin including a phenol compound such as phenol and cresol as a monomer component having a highest content, and preferably including 50% by mole or more of the phenol compound. The phenol-based resin is not particularly limited, and examples of the phenol-based resin include phenol formaldehyde resins, alkylphenol formaldehyde resins, alkylphenol-acetylene resins, and oil-modified phenol formaldehyde resins. One of these resins may be used alone, or two or more of these resins may be used in combination.

### (Plasticizers Other Than Resin)

An oil, a liquid rubber, and an ester-based plasticizer, which are plasticizers other than the resin, will be described.

### (Oil)

Examples of the oil include a mineral oil, a plant oil, and an animal oil. From the viewpoint of life cycle assessment, oils obtained by refining waste oils that have been used in rubber mixers or engines and waste cooking oils that have been used at restaurants may be used. One of these oils may be used alone, or two or more of these oils may be used in combination.

In this specification, the mineral oil refers to an oil derived from mineral resources such as petroleum and natural gas. Examples of the mineral oil include paraffin-based oils (mineral oils), naphthene-based oils, and aromatic oils. Specific examples of the mineral oil include MES (Mild Extracted Solvate), DAE (Distillate Aromatic Extract), TDAE (Treated Distillate Aromatic Extract), TRAE (Treated Residual Aromatic Extract), and RAE (Residual Aromatic Extract). In addition, an oil having a low content of a polycyclic aromatic compound (PCA) can also be used as an environmental measure. Examples of the low PCA content oil include MES, TDAE, and heavy naphthene-based oils.

In this specification, examples of the plant oil include linseed oil, rapeseed oil, safflower oil, soybean oil, corn oil, cottonseed oil, rice bran oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan wax. Furthermore, examples of the plant oil include refined oils (salad oil, etc.) obtained by refining the above oils, ester exchange oils obtained by ester exchange of the above oils, hydrogenated oils obtained by hydrogenation of the above oils, thermally polymerized oils obtained by thermal polymerization of the above oils, oxidatively polymerized oils obtained by oxidation of the above oils, and waste edible oils collected as edible oils and the like. The plant oil may be liquid or solid at 25°C.

### (Liquid Rubber)

The liquid rubber is not particularly limited, as long as the liquid rubber is a polymer that is in a liquid state at 25°C, and examples of the liquid rubber include liquid butadiene polymers (liquid BRs), liquid styrene-butadiene copolymers (liquid SBRs), liquid isoprene polymers (liquid IRs), liquid styrene-isoprene copolymers (liquid SIRs), and liquid farnesene rubbers. One of these liquid rubbers may be used alone, or two or more of these liquid rubbers may be used in combination.

### (Ester-Based Plasticizer)

Examples of the ester-based plasticizer include dibutyl adipate (DBA), diisobutyl adipate (DIBA), dioctyl adipate (DOA), di-2-ethylhexyl azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), and trixylenyl phosphate (TXP). One of these ester-based plasticizers may be used alone, or two or more of these ester-based plasticizers may be used in combination.

The content of the plasticizer (in the case where a plurality of plasticizers are used in combination, the total content of all the plasticizers) per 100 parts by mass of the rubber component is preferably 0 parts by mass or more, more preferably 1 part by mass or more, and further preferably 3 parts by mass or more from the viewpoint of wet grip performance. In addition, the content of the plasticizer is preferably less than 50 parts by mass, more preferably less than 40 parts by mass, and further preferably less than 30 parts by mass from the viewpoint of processability. In addition, the rubber composition may not necessarily include a plasticizer. The content of the plasticizer includes the amount of extender plasticizers such as an extender oil, an extender resin, an extender liquid rubber component, and an extender ester-based plasticizer used for the extension of the rubber component.

### (Vulcanized Rubber Particles)

The vulcanized rubber particles are particles made of vulcanized rubber, and specifically, rubber powder specified in JIS K 6316: 2017, etc., can be used. From the viewpoint of cost and consideration for the environment, recycled rubber powder produced from crushed materials of waste tires, etc., is preferable. One type of vulcanized rubber particles may be used alone, or two or more types of vulcanized rubber particles may be used in combination.

The vulcanized rubber particles are not particularly limited and may be either non-modified vulcanized rubber particles or modified vulcanized rubber particles.

As commercially available vulcanized rubber products, for example, products of Lehigh Technologies, Inc., MURAOKA RUBBER RECLAIMING Co., Ltd., etc., can be used.

### (Processing Aid)

Examples of the processing aid include fatty acid metal salts, fatty acid amides, amide esters, silica surfactants, mixtures of fatty acid metal salts and amide esters, and mixtures of fatty acid metal salts and fatty acid amides. One of these processing aids may be used alone, or two or more of these processing aids may be used in combination. As the processing aid, for example, products commercially available from SCHILL+SEILACHER GmbH, Performance Additives Sdn. Bhd., etc., can be used.

In the case of containing a processing aid, the content of the processing aid per 100 parts by mass of the rubber component is preferably more than 0.5 parts by mass, more preferably more than 1 part by mass, and further preferably more than 1.5 parts by mass from the viewpoint of exhibiting an effect of improving processability. In addition, the content of the processing aid is preferably less than 10 parts by mass, more preferably less than 8.0 parts by mass, and further preferably less than 5.0 parts by mass from the viewpoint of wear resistance and fracture strength.

### (Wax)

The wax is not particularly limited, any waxes that are commonly used in the tire industry are suitable for use, and examples of the wax include mineral-based waxes and plant-derived waxes. Mineral-based waxes refer to waxes derived from mineral resources such as petroleum and natural gas. Plant-derived waxes refer to waxes derived from natural resources such as plants. Among them, mineral-based waxes are preferable. Examples of the plant-derived waxes include rice wax, carnauba wax, and candelilla wax. Examples of the mineral-based waxes include paraffin wax, microcrystalline wax, and refined special waxes thereof, and paraffin wax is preferable. The wax according to the present embodiment does not include stearic acid. As the wax, for example, waxes commercially available from OUCHI SHINKO CHEMICAL INDUSTRIAL Co., Ltd., NIPPON SEIRO CO., LTD., Paramelt B.V., etc., can be used. One of these waxes may be used alone, or two or more of these waxes may be used in combination.

In the case of containing a wax, the content of the wax per 100 parts by mass of the rubber component is preferably 0 parts by mass or more, more preferably greater than 0.5 part by mass, and further preferably greater than 1.0 part by mass from the viewpoint of the weather resistance of the rubber. In addition, the content of the wax is preferably less than 10 parts by mass, more preferably less than 7.0 parts by mass, and further preferably less than 5.0 parts by mass from the viewpoint of preventing whitening of a tire due to blooming.

### (Antioxidant)

The antioxidant is not particularly limited, and examples of the antioxidant include: naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. Among them, p-phenylenediamine-based antioxidants and quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products of Seiko Chemical Co., Ltd., SUMITOMO CHEMICAL COMPANY, LIMITED, OUCHI SHINKO CHEMICAL INDUSTRIAL Co., Ltd., Flexsys, etc., can be used. One of these antioxidants may be used alone, or two or more of these antioxidants may be used in combination.

In the case of containing an antioxidant, the content of the antioxidant per 100 parts by mass of the rubber component is preferably greater than 0.5 parts by mass, more preferably greater than 1.0 part by mass, and further preferably greater than 1.4 parts by mass from the viewpoint of the ozone crack resistance of the rubber. In addition, the content of the antioxidant is preferably less than 2.5 parts by mass, more preferably less than 2.0 parts by mass, and further preferably less than 1.8 parts by mass from the viewpoint of wear resistance and wet grip performance.

### (Stearic Acid)

In the case of containing stearic acid, the content of the stearic acid per 100 parts by mass of the rubber component is preferably greater than 0.5 parts by mass, more preferably greater than 1.0 part by mass, and further preferably greater than 1.5 parts by mass from the viewpoint of processability. In addition, the content of the stearic acid is preferably less than 10 parts by mass, more preferably less than 8.0 parts by mass, and further preferably less than 5.0 parts by mass from the viewpoint of a vulcanization rate.

### (Zinc Oxide)

In the case of containing zinc oxide, the content of the zinc oxide per 100 parts by mass of the rubber component is preferably greater than 0.5 parts by mass, more preferably greater than 1.0 part by mass, and further preferably greater than 1.5 parts by mass from the viewpoint of processability. In addition, the content of the zinc oxide is preferably less than 10 parts by mass, more preferably less than 8.0 parts by mass, and further preferably less than 5.0 parts by mass from the viewpoint of wear resistance.

### (Vulcanizing Agent)

As the vulcanizing agent, sulfur is suitably used. As the sulfur, powdery sulfur, oil-treated sulfur, precipitated sulfur, colloidal sulfur, insoluble sulfur, highly dispersible sulfur, etc., can be used. One of these vulcanizing agents may be used alone, or two or more of these vulcanizing agents may be used in combination.

In the case of containing sulfur, the content of the sulfur per 100 parts by mass of the rubber component is preferably greater than 0.5 parts by mass, more preferably greater than 0.8 parts by mass, and further preferably greater than 1.2 parts by mass from the viewpoint of ensuring a sufficient vulcanization reaction. In addition, the content of the sulfur is preferably less than 5.0 parts by mass, more preferably less than 4.0 parts by mass, and further preferably less than 3.0 parts by mass from the viewpoint of preventing deterioration. In the case of using oil-containing sulfur as the vulcanizing agent, the content of the vulcanizing agent is the total content of pure sulfur contained in the oil-containing sulfur.

As a vulcanizing agent other than sulfur, a known organic crosslinking agent can also be used. The organic crosslinking agent is not particularly limited, as long as the organic crosslinking agent is capable of forming crosslinked chains other than polysulfide bonds, and examples of the organic crosslinking agent include alkylphenol-sulfur chloride condensates, 1,6-hexamethylene sodium dithiosulfate dihydrate, 1,6-bis(N,N'-dibenzylthiocarbamoyldithio)hexane, and dicumyl peroxide, and 1,6-bis(N,N'-dibenzylthiocarbamoyldithio)hexane is preferable. As these organic crosslinking agents, products commercially available from Taoka Chemical Co., Ltd., LANXESS, Flexsys, etc., can be used.

### (Vulcanization Accelerator)

The vulcanization accelerator is not particularly limited, and examples of the vulcanization accelerator include sulfenamide-based vulcanization accelerators, thiazole-based vulcanization accelerators, guanidine-based vulcanization accelerators, thiuram-based vulcanization accelerators, thiourea-based vulcanization accelerators, dithiocarbamate-based vulcanization accelerators, aldehyde-amine-based vulcanization accelerators, aldehyde-ammonia-based vulcanization accelerators, imidazoline-based vulcanization accelerators, xanthate-based vulcanization accelerators, and caprolactam disulfide. Among them, from the viewpoint that the desired effects are more effectively exhibited, one or more vulcanization accelerators selected from the group consisting of sulfenamide-based vulcanization accelerators, thiazole-based vulcanization accelerators, and guanidine-based vulcanization accelerators are preferable. One of these vulcanization accelerators may be used alone, or two or more of these vulcanization accelerators may be used in combination.

Examples of the sulfenamide-based vulcanization accelerators include N-tert-butyl-2-benzothiazolyl sulfenamide (TBBS), N-cyclohexyl-2-benzothiazolyl sulfenamide (CBS), and N,N-dicyclohexyl-2-benzothiazolyl sulfenamide (DCBS).

Examples of the thiazole-based vulcanization accelerators include 2-mercaptobenzothiazole (MBT), salts thereof, di-2-benzothiazolyldisulfide (MBTS), 2-(2,4-dinitrophenyl)mercaptobenzothiazole, and 2-(2,6-diethyl-4-morpholinothio)benzothiazole.

Examples of the guanidine-based vulcanization accelerators include 1,3-diphenylguanidine (DPG), 1,3-di-o-tolylguanidine, 1-o-tolylbiguanide, a di-o-tolylguanidine salt of dicatechol borate, 1,3-di-o-cumenylguanidine, 1,3-di-o-biphenylguanidine, and 1,3-di-o-cumenyl-2-propionylguanidine.

Examples of the thiuram-based vulcanization accelerators include tetrakis(2-ethylhexyl)thiuram disulfide (TOT-N), tetramethylthiuram disulfide (TMTD), tetraethylthiuram disulfide, tetramethylthiuram monosulfide (TMTM), dipentamethylene thiuram disulfide, and dipentamethylene thiuram tetrasulfide.

Examples of the thiourea-based vulcanization accelerators include thiourea compounds such as thiocarbamide, diethylthiourea, dibutylthiourea, trimethylthiourea, and di-ortho-tolylthiourea, N,N'-diphenylthiourea, trimethylthiourea, and N,N'-diethylthiourea.

Examples of the dithiocarbamate-based vulcanization accelerators include piperidinium pentamethylenedithiocarbamate (PPDC), zinc dimethyldithiocarbamate (ZnMDC), zinc diethyldithiocarbamate (ZnEDC), zinc dibutyldithiocarbamate (ZnBDC), zinc dibenzyl dithiocarbamate (ZDBzC), zinc N-ethyl-N-phenyldithiocarbamate (ZnEPDC), zinc N-pentamethylenedithiocarbamate (ZnPDC), sodium dibutyldithiocarbamate (NaBDC), copper dimethyldithiocarbamate (CuMDC), ferric dimethyldithiocarbamate (FeMDC), and tellurium diethyldithiocarbamate (TeEDC).

In the case of containing a vulcanization accelerator, the content of the vulcanization accelerator (in the case where a plurality of vulcanization accelerators are used in combination, the total content of all the vulcanization accelerators) per 100 parts by mass of the rubber component is preferably greater than 1.0 part by mass, more preferably greater than 1.5 parts by mass, and further preferably greater than 2.0 parts by mass. In addition, the content of the vulcanization accelerator per 100 parts by mass of the rubber component is preferably less than 8.0 parts by mass, more preferably less than 5.0 parts by mass, and further preferably less than 4.0 parts by mass.

In this specification, various materials including carbon atoms (e.g., rubber, oil, resin, vulcanization accelerator, antioxidant, surfactant, etc.) may be derived from carbon dioxide in the atmosphere. As methods for obtaining the various materials from carbon dioxide, carbon dioxide may be directly converted, or methane obtained through a methanation process of synthesizing methane from carbon dioxide may be converted.

### [Production]

The rubber composition can be produced by a known method. For example, the above components are kneaded by using a rubber kneading device such as an open roll or a sealed kneading machine (Banbury mixer, kneader, or the like), whereby the rubber composition can be produced.

The kneading step includes, for example, a base kneading step of kneading additives and the ingredients other than the vulcanizing agent and the vulcanization accelerator, and a final kneading (F kneading) step of adding the vulcanizing agent and the vulcanization accelerator to the kneaded product obtained in the base kneading step and kneading the mixture. Furthermore, the base kneading step can also be divided into a plurality of steps, as desired. In the case of dividing the base kneading step, a method therefor may be (1) a method in which a portion of the ingredients and additives is kneaded in advance to form a masterbatch, then the remaining ingredients and additives are added to the obtained masterbatch, and the mixture is kneaded, (2) all the ingredients and additives to be kneaded in the base kneading step are kneaded at once and then the kneaded product is re-milled one or more times, etc. In the method described in (1) above, the number of masterbatches is not limited and may be two or more. In addition, in the case where the number of masterbatches is two or more, all the ingredients and additives to be used in the base kneading step may be allocated to any of the masterbatches.

The kneading condition is not particularly limited, and examples thereof include a condition that: kneading is performed for 3 to 10 minutes at a discharge temperature of 150 to 170°C in the base kneading step; and kneading is performed for 1 to 5 minutes at 70 to 110°C in the final kneading step.

The tire according to the present embodiment can be produced by a normal method using the above rubber composition. Specifically, each of the above rubber compositions that are in an unvulcanized state is extruded into the shape of the first layer, the second layer, or the third layer of the tread portion using an extruder including a die having a predetermined shape, is attached together with other tire members on a tire shaping machine while making adjustment to form a predetermined tire structure, and is shaped by a normal method to form an unvulcanized tire. This unvulcanized tire is heated and pressurized in a vulcanizer, whereby the tire can be produced. The vulcanization condition is not particularly limited, and examples thereof include a condition that vulcanization is performed at 140 to 170°C for 10 to 40 minutes.

### [Applications]

Examples of the heavy duty tire according to the present embodiment include tires having a standardized load of greater than 1000 kg such as tires for a large truck and a bus and tires for a small truck, a bus, and a van. The heavy duty tire according to the present embodiment is preferably a tire that is to be mounted to a large vehicle such as a truck, a bus, and a construction vehicle and has a standardized load of 1400 kg or more.

### EXAMPLES

The following will describe examples that are considered preferable when implementing the present invention, but the scope of the present invention is not limited to these examples. The results obtained through calculations based on the evaluation methods described below for rubber compositions obtained in accordance with Table 1 and tires obtained in accordance with Table 2 and Table 3 using various chemicals listed below are shown in Tables 2 and 3.

### <Various Chemicals>

Chemicals used in Examples and Comparative Examples are listed below.
NR: TSR 20
SBR: HPR840 (S-SBR, styrene content: 10% by mass, vinyl content: 42% by mole, Tg: -60°C, non-oil-extended product) manufactured by JSR Corporation.
BR: UBEPOL BR (registered trademark) 150B (unmodified BR, cis content: 97% by mole, Mw: 440 thousand) manufactured by Ube Corporation.
Carbon black 1: SHOBLACK N134 (N₂SA: 148 m²/g, average primary particle diameter: 18 nm) manufactured by Cabot Japan K.K.
Carbon black 2: SHOBLACK N220 (N₂SA: 115 m²/g, average primary particle diameter: 22 nm) manufactured by Cabot Japan K.K.
Carbon black 3: SHOBLACK N330 (N₂SA: 75 m²/g, average primary particle diameter: 30 nm) manufactured by Cabot Japan K.K.
Silica 1: ULTRASIL 9100GR (N₂SA: 230 m²/g, average primary particle diameter: 15 nm) manufactured by Evonik Industries AG.
Silica 2: ULTRASIL VN3 (N₂SA: 175 m²/g, average primary particle diameter: 18 nm) manufactured by Evonik Industries AG.
Silane coupling agent: Si266 (bis(3-triethoxysilylpropyl)disulfide) manufactured by Evonik Industries AG.
Antioxidant: NOCRAC 6C (N-(1,3-dimethylbutyl)-N'-phenyl-p-phenylenediamine) manufactured by OUCHI SHINKO CHEMICAL INDUSTRIAL Co., Ltd.
Stearic acid: bead stearic acid, Camellia, manufactured by NOF Corporation
Zinc oxide: Zinc Oxide Type-1 manufactured by Mitsui Mining & Smelting Co., Ltd.
Sulfur: powdery sulfur manufactured by Karuizawa Sulfur Co., Ltd.
Vulcanization accelerator 1: NOCCELER NS (N-t-butyl-2-benzothiazole sulfenamide) manufactured by OUCHI SHINKO CHEMICAL INDUSTRIAL Co., Ltd.
Vulcanization accelerator 2: NOCCELER D (1,3-diphenylguanidine (DPG)) manufactured by OUCHI SHINKO CHEMICAL INDUSTRIAL Co., Ltd.

### (Examples and Comparative Examples)

In accordance with each of blending formulas shown in Table 1, the chemicals other than the sulfur and the vulcanization accelerator are kneaded for 1 to 10 minutes by using a 1.7-L sealed Banbury mixer until reaching a discharge temperature of 150 to 160°C, to obtain a kneaded product. Next, the sulfur and the vulcanization accelerator are added to the obtained kneaded product, and the mixture is kneaded for 4 minutes by using a twin-screw open roll until reaching 105°C, to obtain an unvulcanized rubber composition. The obtained unvulcanized rubber compositions are molded into the shapes of the first layer, the second layer, and the third layer of the tread and attached together with other tire members to produce an unvulcanized tire, and the unvulcanized tire is pressed and vulcanized at 150°C for 35 minutes to obtain each test tire shown in Tables 2 and 3.

### <Measurement of 0°C tanδ and 0°C E*>

For each vulcanized rubber test piece produced by cutting the first layer of the tread portion of each test tire into a size of 20 mm in length, 4 mm in width, and 1 mm in thickness such that the tire circumferential direction corresponds to a long side and the tire radial direction is the thickness direction, the loss tangent tanδ and the complex elastic modulus E* are measured under the conditions of a temperature of 0°C, a frequency of 10 Hz, an initial strain of 10%, a dynamic strain of ±2.5%, and tensile mode using a dynamic viscoelasticity measuring device (EPLEXOR series manufactured by NETZSCH-Gerätebau GmbH).

### <Measurement of Elongation at Break EB>

A No. 7 dumbbell-shaped test piece with a thickness of 1 mm is produced from the first layer of the tread portion of each test tire, and a tensile test is conducted at 23°C and a tensile speed of 3.3 mm/s in accordance with JIS K 6251 "Rubber, vulcanized or thermoplastics-Determination of tensile stress-strain properties" to measure the elongation at break EB (%).

### <Wet Grip Performance>

Each test tire is fitted to a rim and mounted to a rear wheel of a bus that is a test vehicle. Using this test vehicle, a braking distance from an initial speed of 100 km/h on a wet asphalt road surface is obtained. The braking distance is shown as an index with the result of a reference comparative example (Comparative Example 1) being defined as 100. A higher index indicates that the wet grip performance is better. $\begin{matrix}\left(Wet grip performance index\right) \\ = \left(braking distance of reference comparative example\right) / \left(\begin{matrix}braking distance of each \\ test tire\end{matrix}\right) \times 100\end{matrix}$

### <Low Fuel Consumption Performance>

For each test tire, a rolling resistance coefficient (RRC) is measured in accordance with JIS D 4234: 2009 (ISO 28580). The inverse value of the rolling resistance coefficient is shown as an index with the result of a reference comparative example (Comparative Example 1) being defined as 100. A higher index indicates that the rolling resistance is lower and that the low fuel consumption performance is better. $\begin{matrix}\left(Low fuel consumption performance index\right) \\ = \left(rolling resistance coefficient or reference comparative example\right) / \left(\begin{matrix}rolling \\ resistance coefficient of each test tire\end{matrix}\right) \times 100\end{matrix}$

### <Rib Tear Resistance>

Each test tire is fitted to a rim and mounted to a rear wheel of a bus that is a test vehicle. This test vehicle is driven on an asphalt road. After traveling 10000 km, the appearance of the tire is observed. If cracks are found at the bottom of any circumferential groove, the length and depth of the cracks are measured. The inverse of the product of the length and depth of the cracks is obtained and used as an indicator for rib tear resistance. The inverse is shown as an index with the result of a reference comparative example (Comparative Example 2) being defined as 100. A higher value indicates that rib tear is less likely to occur and that the rib tear resistance is better. $\begin{matrix}\left(Rib tear resistance index\right) \\ = \left(\begin{matrix}crack length of reference comparative example \times crack depth of reference \\ comparative example\end{matrix}\right) / \left(crack length of each text time\times crack depth of each text tire\right) \times 100\end{matrix}$

### <Combined Performance>

The total value of the above wet grip performance, low fuel consumption performance, and rib tear resistance is shown as a combined performance index.

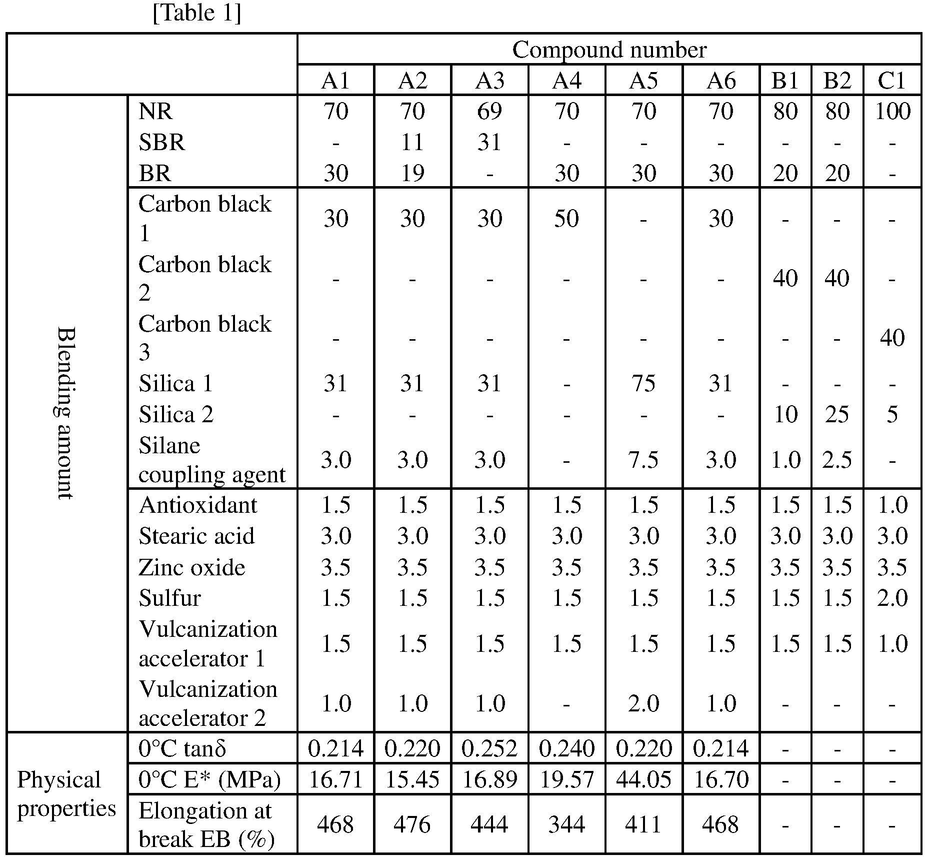

**[Table 2]**

| | | Example | | | |
|---|---|---|---|---|---|
| | | 1 | 2 | 3 | 4 |
| Blending formula | First layer | A1 | A2 | A3 | A3 |
| | Second layer | B1 | B1 | B1 | B2 |
| | Third layer | C1 | C1 | C1 | C1 |
| Physical properties | 0°C E*1 (MPa) | 16.71 | 15.45 | 16.89 | 16.89 |
| | 0°C tanδ1 | 0.214 | 0.220 | 0.252 | 0.252 |
| | EB1 | 468 | 476 | 444 | 444 |
| S1 (parts by mass) | | 31 | 31 | 31 | 31 |
| S2 (parts by mass) | | 10 | 10 | 10 | 25 |
| S3 (parts by mass) | | 5 | 5 | 5 | 5 |
| Sₘₐₓ | | 31 | 31 | 31 | 31 |
| Dt (m) | | 1.00 | 1.00 | 1.00 | 1.00 |
| Sₘₐₓ/Dt | | 31.0 | 31.0 | 31.0 | 31.0 |
| 0°C tan δ1 × Dt | | 0.214 | 0.220 | 0.252 | 0.252 |
| Evaluation | Wet grip performance | 95 | 97 | 110 | 110 |
| | Low fuel consumption performance | 105 | 108 | 111 | 114 |
| | Rib tear resistance | 100 | 100 | 105 | 100 |
| | Combined performance | 300 | 305 | 326 | 324 |

**[Table 3]**

| | | Comparative Example | | |
|---|---|---|---|---|
| | | 1 | 2 | 3 |
| Blending formula | First layer | A4 | A5 | A6 |
| | Second layer | B1 | B1 | - |
| | Third layer | C1 | C1 | C1 |
| Physical properties | 0°C E*1 (MPa) | 19.57 | 44.05 | 16.70 |
| | 0°C tanδ1 | 0.240 | 0.220 | 0.214 |
| | EB1 | 344 | 411 | 468 |
| S1 (parts by mass) | | 0 | 75 | 31 |
| S2 (parts by mass) | | 10 | 10 | - |
| S3 (parts by mass) | | 5 | 5 | 5 |
| Sₘₐₓ | | 10 | 75 | 31 |
| Dt (m) | | 1.00 | 0.70 | 1.00 |
| Sₘₐₓ/Dt | | 10.0 | 107.1 | 31.0 |
| 0°C tan δ1 × Dt | | 0.240 | 0.154 | 0.214 |
| Evaluation | Wet grip performance | 100 | 97 | 95 |
| | Low fuel consumption performance | 100 | 96 | 100 |
| | Rib tear resistance | 90 | 100 | 85 |
| | Combined performance | 290 | 293 | 280 |

## Claims

1. A heavy duty tire having a tread portion (1), wherein
the tread portion (1) includes at least a first layer (4) forming a tread surface (7), a second layer (5) adjacent to an inner side in a tire radial direction of the first layer (4), and a third layer (6) adjacent to the inner side in the tire radial direction of the second layer (5),
each of the first layer (4), the second layer (5), and the third layer (6) is composed of a rubber composition containing a rubber component and a filler, and
when contents of silica per 100 parts by mass of the rubber component in the rubber compositions constituting the first layer (4), the second layer (5), and the third layer (6) are denoted by S1 (parts by mass), S2 (parts by mass), and S3 (parts by mass), respectively, a maximum value among S1, S2, and S3 is denoted by Sₘₐₓ, and a tire outer diameter is denoted by Dt (m), $S 1 \geq 0 , S 2 \geq 0 , S 3 \geq 0 , {S}_{max} > 30 , Dt > 0.80 , and {S}_{max} / Dt < 100 .$

2. The heavy duty tire according to claim 1, wherein a rubber component constituting a layer corresponding to Sₘₐₓ contains greater than 10% by mass of a styrene-butadiene rubber.

3. The heavy duty tire according to claim 1, wherein a rubber component constituting a layer corresponding to Sₘₐₓ contains greater than 30% by mass of a styrene-butadiene rubber.

4. The heavy duty tire according to any one of claims 1 to 3, wherein a rubber component constituting a layer corresponding to Sₘₐₓ contains greater than 10% by mass of an isoprene-based rubber.

5. The heavy duty tire according to any one of claims 1 to 3, wherein a rubber component constituting a layer corresponding to Sₘₐₓ contains greater than 30% by mass of an isoprene-based rubber.

6. The heavy duty tire according to any one of claims 1 to 5, wherein the rubber component constituting the first layer (4) contains 1% by mass or more of a styrene-butadiene rubber.

7. The heavy duty tire according to any one of claims 1 to 6, wherein S1 is greater than 30.

8. The heavy duty tire according to any one of claims 1 to 7, wherein S1 is larger than S2 and S3.

9. The heavy duty tire according to any one of claims 1 to 8, wherein S1 > S2 > S3.

10. The heavy duty tire according to any one of claims 1 to 9, wherein Dt is 1.00 m or more.

11. The heavy duty tire according to any one of claims 1 to 10, wherein tanδ at 0°C (0°C tanδ1) of the rubber composition constituting the first layer (4) is 0.21 of more, wherein the "0°C tanδ" is a loss tangent (tan δ) measured under the conditions of a temperature of 0°C, a frequency of 10 Hz, an initial strain of 10%, a dynamic strain of ±2.5%, and tensile mode.

12. The heavy duty tire according to claim 11, wherein a product of 0°C tanδ1 and Dt (0°C tan δ1 × Dt) is 0.190 or more.

13. The heavy duty tire according to any one of claims 1 to 12, wherein a complex elastic modulus at 0°C (0°C E*1) of the rubber composition constituting the first layer (4) is 15.0 MPa or more, wherein the "0°C E*" is a complex elastic modulus E* (MPa) measured under the conditions of a temperature of 0°C, a frequency of 10 Hz, an initial strain of 10%, a dynamic strain of ±2.5%, and tensile mode.

14. The heavy duty tire according to any one of claims 1 to 13, wherein an elongation at break (EB1) of the rubber composition constituting the first layer (4) is 400% or more.

## Patentansprüche

1. Reifen für schwere Last, der einen Laufstreifenabschnitt (1) aufweist, wobei
der Laufstreifenabschnitt (1) mindestens eine erste Schicht (4), die eine Laufstreifenfläche (7) bildet, eine zweite Schicht (5), die zu einer in einer Reifenradialrichtung inneren Seite der ersten Schicht (4) benachbart ist, und eine dritte Schicht (6), die zu der in Reifenradialrichtung inneren Seite der zweiten Schicht (5) benachbart ist, umfasst,
jede der ersten Schicht (4), der zweiten Schicht (5) und der dritten Schicht (6) aus einer Kautschukzusammensetzung zusammengesetzt ist, die eine Kautschukkomponente und einen Füllstoff enthält, und
wenn Gehalte an Siliciumdioxid pro 100 Massenteile der Kautschukkomponente in den Kautschukzusammensetzungen, die die erste Schicht (4), die zweite Schicht (5) und die Schicht (6) bilden, jeweils mit S1 (Massenteile), S2 (Massenteile) und S3 (Massenteile) bezeichnet werden, ein Maximalwert unter S1, S2 und S3 mit Sₘₐₓ bezeichnet wird und ein Reifenaußendurchmesser mit Dt (m) bezeichnet wird, $S 1 \geq 0 , S 2 \geq 0 , S 3 \geq 0 , {S}_{max} > 30 , Dt > 0.80 , und {S}_{max} / Dt < 100 .$

2. Reifen für schwere Last nach Anspruch 1, wobei eine Kautschukkomponente, die eine Sₘₐₓ entsprechende Schicht bildet, mehr als 10% Massenprozent eines Styrol-Butadien-Kautschuks enthält.

3. Reifen für schwere Last nach Anspruch 1, wobei eine Kautschukkomponente, die eine Sₘₐₓ entsprechende Schicht bildet, mehr als 30% Massenprozent eines Styrol-Butadien-Kautschuks enthält.

4. Reifen für schwere Last nach einem der Ansprüche 1 bis 3, wobei eine Kautschukkomponente, die eine Sₘₐₓ entsprechende Schicht bildet, mehr als 10% Massenprozent eines Kautschuks auf Isoprenbasis enthält.

5. Reifen für schwere Last nach einem der Ansprüche 1 bis 3, wobei eine Kautschukkomponente, die eine Sₘₐₓ entsprechende Schicht bildet, mehr als 30% Massenprozent eines Kautschuks auf Isoprenbasis enthält.

6. Reifen für schwere Last nach einem der Ansprüche 1 bis 5, wobei die Kautschukkomponente, die die erste Schicht (4) bildet, 1% Massenprozent oder mehr eines Styrol-Butadien-Kautschuks enthält.

7. Reifen für schwere Last nach einem der Ansprüche 1 bis 6, wobei S1 mehr als 30 beträgt.

8. Reifen für schwere Last nach einem der Ansprüche 1 bis 7, wobei S1 größer als S2 und S3 ist.

9. Reifen für schwere Last nach einem der Ansprüche 1 bis 8, wobei S1 > S2 > S3 ist.

10. Reifen für schwere Last nach einem der Ansprüche 1 bis 9, wobei Dt 1,00 m oder mehr beträgt.

11. Reifen für schwere Last nach einem der Ansprüche 1 bis 10, wobei tanδ bei 0°C (0°C tanδ1) der Kautschukzusammensetzung, die die erste Schicht (4) bildet, 0,21 oder mehr beträgt, wobei der "0°C tanδ" ein Verlusttangens (tan δ) ist, der unter den Bedingungen einer Temperatur von 0°C, einer Frequenz von 10 Hz, einer Anfangsdehnung von 10 %, einer dynamischen Dehnung von +/-2,5% und Zugmodus gemessen wird.

12. Reifen für schwere Last nach Anspruch 11, wobei ein Produkt aus 0°C tanδ1 und Dt (0°C tan δ1 × Dt) 0,190 oder mehr beträgt.

13. Reifen für schwere Last nach einem der Ansprüche 1 bis 12, wobei ein komplexer Elastizitätsmodul bei 0°C (0°C E*1) der Kautschukzusammensetzung, die die erste Schicht (4) bildet, 15,0 MPa oder mehr beträgt, wobei der "0°C E*" ein komplexer Elastizitätsmodul E* (MPA) ist, der unter den Bedingungen einer Temperatur von 0°C, einer Frequenz von 10 Hz, einer Anfangsdehnung von 10 %, einer dynamischen Dehnung von +/-2,5% und Zugmodus gemessen wird.

14. Reifen für schwere Last nach einem der Ansprüche 1 bis 13, wobei eine Bruchdehnung (EB1) der Kautschukzusammensetzung, die die erste Schicht (4) bildet, 400% oder mehr beträgt.

## Revendications

1. Pneumatique pour service intensif ayant une portion formant bande de roulement (1), dans lequel
la portion formant bande de roulement (1) inclut au moins une première couche (4) formant une surface de bande de roulement (7), une deuxième couche (5) adjacente à un côté intérieur dans une direction radiale du pneumatique de la première couche (4), et une troisième couche (6) adjacente au côté intérieur dans la direction radiale du pneumatique de la deuxième couche (5),
chacune de la première couche (4), de la deuxième couche (5) et de la troisième couche (6) est composée d'une composition de caoutchouc contenant un composant de caoutchouc et une charge, et
quand des teneurs en silice pour 100 parts en masse du composant de caoutchouc dans les compositions de caoutchouc constituant la première couche (4), la deuxième couche (5), et la troisième couche (6) sont désignés par S1 (parts en masse), S2 (parts en masse) et S3 (parts en masse), respectivement, une valeur maximum parmi S1, S2 et S3 est désignée par Sₘₐₓ, et un diamètre extérieur du pneumatique est désigné par Dt (m), $S 1 \geq 0 , S 2 \geq 0 , S 3 \geq 0 , {S}_{max} > 30 , Dt > 0 , 80 , and {S}_{max} / Dt < 100 .$

2. Pneumatique pour service intensif selon la revendication 1, dans lequel un composant de caoutchouc constituant une couche correspondant à Sₘₐₓ contient plus de 10 % en masse d'un caoutchouc styrène butadiène.

3. Pneumatique pour service intensif selon la revendication 1, dans lequel un composant de caoutchouc constituant une couche correspondant à Sₘₐₓ contient plus de 30 % en masse d'un caoutchouc styrène butadiène.

4. Pneumatique pour service intensif selon l'une quelconque des revendications 1 à 3, dans lequel un composant de caoutchouc constituant une couche correspondant à Sₘₐₓ contient plus de 10 % en masse d'un caoutchouc à base d'isoprène.

5. Pneumatique pour service intensif selon l'une quelconque des revendications 1 à 3, dans lequel un composant de caoutchouc constituant une couche correspondant à Sₘₐₓ contient plus de 30 % en masse d'un caoutchouc à base d'isoprène.

6. Pneumatique pour service intensif selon l'une quelconque des revendications 1 à 5, dans lequel le composant de caoutchouc constituant la première couche (4) contient 1 % en masse ou plus d'un caoutchouc styrène butadiène.

7. Pneumatique pour service intensif selon l'une quelconque des revendications 1 à 6, dans lequel S1 est supérieur à 30.

8. Pneumatique pour service intensif selon l'une quelconque des revendications 1 à 7, dans lequel S1 est plus grand que S2 et S3.

9. Pneumatique pour service intensif selon l'une quelconque des revendications 1 à 8, dans lequel S1 > S2 > S3.

10. Pneumatique pour service intensif selon l'une quelconque des revendications 1 à 9, dans lequel Dt est de 1,00 m ou plus.

11. Pneumatique pour service intensif selon l'une quelconque des revendications 1 à 10, dans lequel la valeur tanδ à 0 °C (0°C tanδ1) de la composition de caoutchouc constituant la première couche (4) est de 0,21 ou plus, « 0°C tanδ » étant une tangente de perte (tanδ) mesurée dans les conditions suivantes : température de 0 °C, fréquence de 10 Hz, contrainte initiale de 10 %, contrainte dynamique de ± 2,5 %, et mode de traction.

12. Pneumatique pour service intensif selon la revendication 11, dans lequel un produit de 0°C tanδ1 et Dt (0°C tan δ1 × Dt) est de 0,190 ou plus.

13. Pneumatique pour service intensif selon l'une quelconque des revendications 1 à 12, dans lequel un module d'élasticité complexe à 0 °C (0°C E*1) de la composition de caoutchouc constituant la première couche (4) est de 15,0 MPa ou plus, « 0°C E*1 » étant un module d'élasticité complexe E* (MPa) mesuré dans les conditions suivantes : température de 0 °C, fréquence de 10 Hz, contrainte initiale de 10 %, contrainte dynamique de ± 2,5 %, et mode de traction.

14. Pneumatique pour service intensif selon l'une quelconque des revendications 1 à 13, dans lequel un allongement à la rupture (EB1) de la composition de caoutchouc constituant la première couche (4) est de 400 % ou plus.
